# EUROPEAN PATENT APPLICATION

(11) **EP 3 378 309 A1**
(43) Date of publication of application: **26.09.2018**
(21) Application number: 17168882.3
(22) Date of filing: 01.05.2017
(51) Int. Cl.: A01M 23/24, A01M 31/00

(54) **AUTOMATIC RECHARGEABLE TRAP CONFIGURED FOR DETERMINING ITS RATS AND MICE KILLS**

(30) Priority: 24.03.2017 EP 17162722
(71) Applicant: Skehøjgaard Development ApS, 9610 Nørager (DK)
(72) Inventor: SØRENSEN, Kurt, 9610 Nørager (DK)
(74) Representative: Larsen & Birkeholm A/S

(57) **Abstract**

The present invention relates to an automatic rechargeable trap comprising a spring driven and/or gas pressure driven killing means; and species monitoring means configured for determining the species by monitoring the degree of advancement of the killing means during an individual triggering.

## Description

### Technical field of the invention

The present invention relates to automatic rechargeable killing traps.

### Background of the invention

Urban environments provide suitable conditions for certain species of rodents, particularly Norway rats and house mice, to proliferate. Mice and rats generally pose a health hazard due to disease spreading. Rat urine per se presents an additional health hazard because of the potential presence of Leptospira spp., which can enter the blood through skin cuts causing the potentially fatal Weil's disease. In addition, presence of rats and mice often impose a significant economic cost through the potential destruction of building materials, such as wall and roof insulation, electrical wiring, packaging, and contaminating foods etc. Rats are much worse than mice in regard to both disease spreading and destruction of building materials. To devise and target efficient pest control strategies, it is essential to have a reliable and sensitive method of identifying the presence and location of rats and mice in the environment and of identifying the species concerned.

Conventional methods of detection rely on an infestation reaching large enough proportions to show physical signs, the presence of faeces and signs of gnawing damage are the most commonly used. Whilst such signs can be reliable, they usually identify an infestation that is well established, which will be difficult to eradicate and could already have caused much damage. Small numbers of rats and mice will not always leave such obvious signs in visible sites. Droppings from mice are often difficult to spot, while those from rats are usually located in small numbers of latrine sites. Therefore, whilst such methods can be reliable for detecting large scale infestations, they are usually inadequate for detecting the presence of rodents at a low level.

### Object of the Invention

The objective of the present invention is to provide an automatic rechargeable trap suitable for use in a system for detecting and predicting rats and mice infestations, which alleviates or mitigates the disadvantages associated with prior art methods.

### Description of the Invention

One aspect of the present invention relates to an automatic rechargeable trap comprising:
a) a spring driven and/or gas pressure driven killing means; and
b) species monitoring means configured for determining the species by monitoring the degree of advancement of the killing means during an individual triggering.

Mechanical traps are characterised by killing means that strikes the rodent and almost instantly kills the rodent. The killing means in mechanical traps are normally spring driven or gas pressure driven, and may be recharged by electrical means or gas pressure driven means.
The species monitoring means is configured for determining the species by monitoring the degree of advancement of the killing means during an individual triggering. If a mouse has activated the killing means, the killing means will travel a longer distance than for a rat due to the difference in size. Hence, this method of distinguishing between mice and rats is simple and reliable. The information about an individual trap may be collected and used in analysing the rat and/or mice activity in a selected geographical area, where several traps are positioned.

In one or more embodiments, the automatic rechargeable trap further comprises a kill monitoring means configured for determining the number of kills by monitoring the number of triggering of the killing means. The kill monitoring means should simply be able to detect each time the killing means is activated. The kill monitoring means could be embodied as e.g. a shock sensor, or a motion sensor.

In one or more embodiments, the automatic rechargeable trap further comprises a transmitter unit configured for receiving monitoring data from the species monitoring means and/or from the kill monitoring means, and configured for transmitting the received monitoring data. The transmitter unit is configured for receiving monitoring data from the species monitoring means and from the kill monitoring means, and configured for transmitting the received monitoring data. The signal may be transmitted by e.g. satellite, 4G, 3G, 5G, radio link, GSM, LTE, UMTS and/or through an internet-of-things (IoT) network.

In one or more embodiments, the automatic rechargeable trap further comprises a housing with a rat and mouse entry opening positioned in the side wall and/or in the bottom wall; and wherein the spring driven and/or gas pressure driven killing means is positioned at a level above the level of the rat and/or mouse entry opening, such that a rat or mouse can reach the killing means when standing within the housing on their hind legs.

In one or more embodiments, the spring driven and/or gas pressure driven killing means comprises a piston, and wherein the piston, after a triggered release, is configured to hold its position for a predefined period of time. The predefined time period may be milliseconds (e.g. 10-500 milliseconds) or a few seconds (e.g. 0.5-3 seconds), such as 0.01-5 seconds. This configuration is to secure that the rodent is killed. The species monitoring means may then be configured for monitoring the degree of advancement of the piston during the predefined period of time that the piston holds its position during a triggered release.

In one or more embodiments, the automatic rechargeable trap further comprises a counter configured for calculating the number of rats and mice killed by said killing means during a period of time.

In one or more embodiments, the spring driven and/or gas pressure driven killing means comprises a piston, and wherein the piston, after a triggered release, is returned to a charged position within a piston bore by a motor, and wherein a) the motor operating time needed to return the piston to a charged position and/or b) the force needed by the motor to return the piston to a charged position and/or c) the number of motor shaft revolutions needed to return the piston to a charged position and/or d) measuring the power consumption needed to return the piston to a charged position, are used by the species monitoring means for monitoring the degree of advancement of the piston.

In one or more embodiments, the species monitoring means is configured for differentiating between rats and mice by using the degree of advancement of the piston during a triggered release.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows a perspective view of an automatic rechargeable trap in accordance with various embodiments of the invention; and
Figure 2 is a cross-section of an automatic rechargeable trap in accordance with various embodiments of the invention.

### References

- 100: Automatic rechargeable trap
- 200: Spring driven and/or gas pressure driven killing means
- 210: Piston
- 220: Piston bore
- 300: Species monitoring means
- 400: Housing
- 410: Motor unit
- 430: Rat and mouse entry opening
- 440: Side wall
- 450: Bottom wall
- 460: Trigger rod

### Detailed Description of the Invention

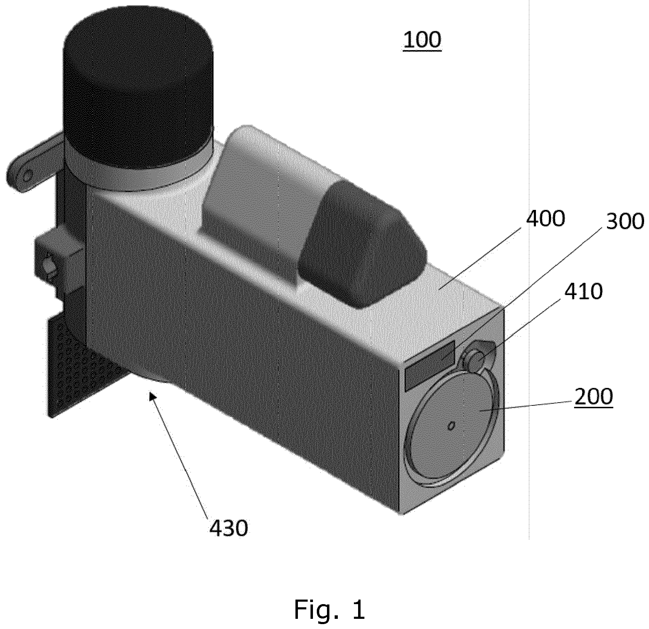

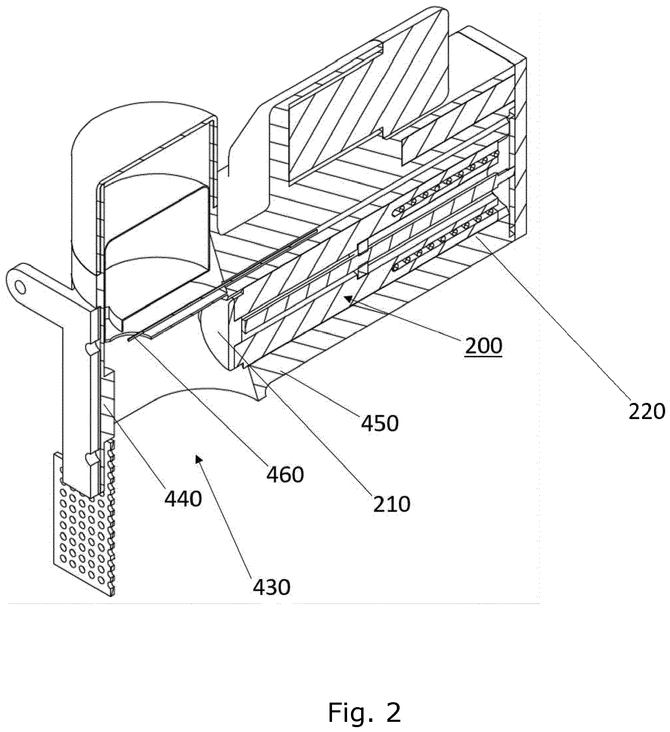

Figure 1 shows a perspective view of an automatic rechargeable trap in accordance with various embodiments of the invention. The automatic rechargeable trap 100 comprises a spring driven and/or gas pressure driven killing means 200; and species monitoring means 300 configured for determining the species by monitoring the degree of advancement of the killing means 200 during an individual triggering. The automatic rechargeable trap is shown comprising a housing 400 with a rat and mouse entry opening 430 positioned in the side wall 440 and in the bottom wall 450 (Figure 2). Figure 2 is a cross-section of an automatic rechargeable trap. The spring driven and/or gas pressure driven killing means 200 is positioned at a level above the level of the rat and mouse entry opening 430, such that a rat or mouse can reach the killing means when standing within the housing 400 on their hind legs, while activating a trigger rod 460 with its head.

The spring driven and/or gas pressure driven killing means 200 comprises a piston 210 supported by a piston bore 220. After a triggered release, the piston 210 is returned to a charged position within the piston bore 220 by a motor unit 410.

## Claims

1. An automatic rechargeable trap (100) comprising:
a) a spring driven and/or gas pressure driven killing means (200); and
b) species monitoring means (300) configured for determining the species by monitoring the degree of advancement of the killing means (200) during an individual triggering.

2. An automatic rechargeable trap (100) according to claim 1, further comprising c) kill monitoring means configured for determining the number of kills by monitoring the number of triggering of the killing means.

3. An automatic rechargeable trap (100) according to any one of the claims 1-2, further comprising d) a transmitter unit configured for receiving monitoring data from the species monitoring means (300) and/or from the kill monitoring means, and configured for transmitting the received monitoring data.

4. An automatic rechargeable trap (100) according to any one of the claims 1-3, further comprising a housing (400) with a rat and mouse entry opening (430) positioned in the side wall (440) and/or in the bottom wall (450); and wherein the spring driven and/or gas pressure driven killing means (200) is positioned at a level above the level of the rat and/or mouse entry opening (430), such that a rat or mouse can reach the killing means when standing within the housing (400) on their hind legs.

5. An automatic rechargeable trap (100) according to any one of the claims 1-4, wherein the spring driven and/or gas pressure driven killing means (200) comprises a piston (210), and wherein the piston (210), after a triggered release, is configured to hold its position for a predefined period of time.

6. An automatic rechargeable trap (100) according to claim 5, wherein the species monitoring means (300) is configured for monitoring the degree of advancement of the piston (210) during the predefined period of time that the piston (210) holds its position during a triggered release.

7. An automatic rechargeable trap (100) according to any one of the claims 1-6, further comprising a counter configured for calculating the number of rats and mice killed by said killing means (200) during a period of time.

8. An automatic rechargeable trap (100) according to any one of the claims 1-7, wherein the spring driven and/or gas pressure driven killing means (200) comprises a piston (210), and wherein the piston (210), after a triggered release, is returned to a charged position within a piston bore (220) by a motor unit (410), and wherein a) the motor operating time needed to return the piston (210) to a charged position and/or b) the force needed by the motor to return the piston (210) to a charged position and/or c) the number of motor shaft revolutions needed to return the piston (210) to a charged position and/or d) measuring the power consumption needed to return the piston (210) to a charged position, are used by the species monitoring means (300) for monitoring the degree of advancement of the piston (210).

9. An automatic rechargeable trap according to any one of the claims 1-8, wherein the species monitoring means (300) is configured for differentiating between rats and mice by using the degree of advancement of the piston (210) during a triggered release.
